# EUROPEAN PATENT SPECIFICATION

(11) **EP 4 102 250 B1**
(45) Date of publication and mention of the grant of the patent: **18.11.2026**
(21) Application number: 21750149.3
(22) Date of filing: 27.01.2021
(51) Int. Cl.: G01S 7/4865, G01S 7/487, G01S 17/10

(54) **PHASE DIFFERENCE CALCULATION DEVICE, PHASE DIFFERENCE CALCULATION METHOD, AND PROGRAM**
VORRICHTUNG, VERFAHREN UND PROGRAMM ZUR PHASENDIFFERENZBERECHNUNG
DISPOSITIF DE CALCUL DE DÉPHASAGE, PROCÉDÉ DE CALCUL DE DÉPHASAGE, ET PROGRAMME

(30) Priority: 03.02.2020 JP 2020016075
(43) Date of publication of application: 14.12.2022
(73) Proprietor: Sony Interactive Entertainment Inc., Tokyo 108-0075 (JP)
(72) Inventor: SHIKAMA Kazuyuki, Tokyo 108-0075 (JP)
(74) Representative: Fish & Richardson P.C.
(86) International application number: PCT/JP2021/002744
(87) International publication number: WO 2021/157439

(56) References cited:
- WO-A1-2010/098454
- WO-A1-2017/138032
- WO-A1-2019/188348
- WO-A1-2019/230306
- CN-A- 110 456 369
- CN-A- 110 673 152
- US-B1- 10 215 856

## Description

### [Technical Field]

The present invention relates to a phase difference calculation device, a phase difference calculation method, and a program.

### [Background Art]

A ToF (Time of Flight) sensor that measures a distance on the basis of the time of flight of light is used in order to acquire, for example, three-dimensional information of a subject. A technique related to the ToF sensor is described in, for example, PTL 1. In the technique described in PTL 1, a depth image acquisition device includes a light emitting diode for applying modulated light toward a detection region, a ToF sensor for receiving light that is reflected by an object in the detection region and that enters the ToF sensor and outputting a signal for generating a depth image, and a filter for allowing, among the incident light, relatively more light having a predetermined wavelength band to pass through, and at least any one of the arrangements of the light emitting diode, the ToF sensor, and the filter is controlled according to the temperature of the light emitting diode or the ToF sensor. PTL 2 teaches a distance acquisition device that includes a light emitter and an imaging element that performs exposure according to an exposure pulse. An exposure controller generates a timing signal indicating multiple pairs of emission pulse and exposure pulse. A multipath detector obtains a sequence of received light signals and finally determines the presence or absence of multipath according to a difference in a comparison result.

### [Citation List]

### [Patent Literature]

[PTL 1]
   Japanese Patent Laid-open No. 2019-078748
[PTL 2]
   WO 2019/ 188348 A1

### [Summary]

### [Technical Problem]

However, in a case where the ToF sensor is used in an environment where other objects are present around the object, such as an indoor room, there is a possibility that light reflected by the same object enters the ToF sensor through a plurality of reflection paths and the measurement accuracy is thus reduced. A technique for coping with what is generally called multipath reflected light as described above is not described in, for example, PTL 1.

Accordingly, an object of the present invention is to provide a phase difference calculation device, a phase difference calculation method, and a program that can improve the measurement accuracy of a ToF sensor by reducing the influence of multipath reflected light.

### [Solution to Problem]

The problem is solved by the subject-matter of the independent claims.

According to an aspect of the present invention, provided is a phase difference calculation according to claim 1.

According to another aspect of the present invention, provided is a phase difference calculation method according to claim

According to still another aspect of the present invention, provided is a program according to claim 5.

### [Brief Description of Drawings]

[FIG. 1]

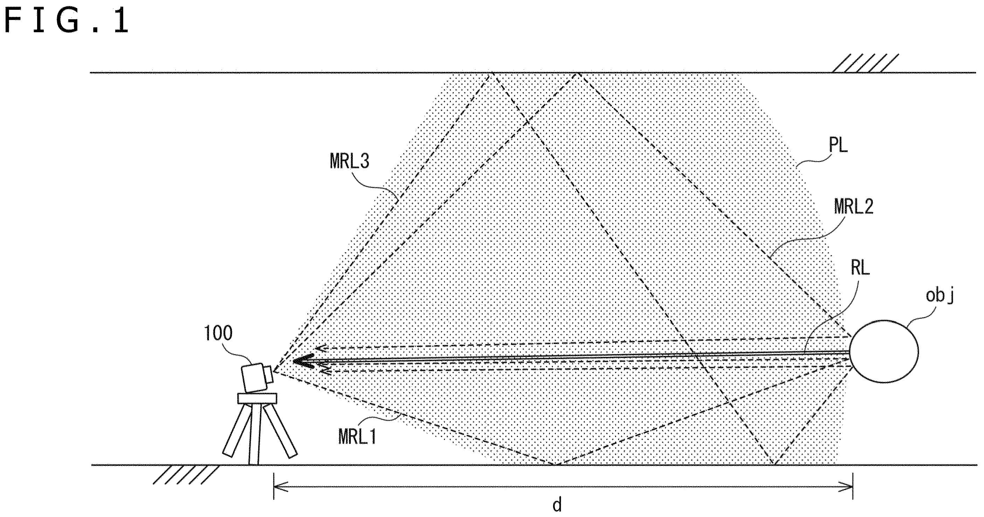

   FIG. 1 is a diagram for explaining an outline of measurement by a ToF sensor according to an embodiment of the present invention.
[FIG. 2]

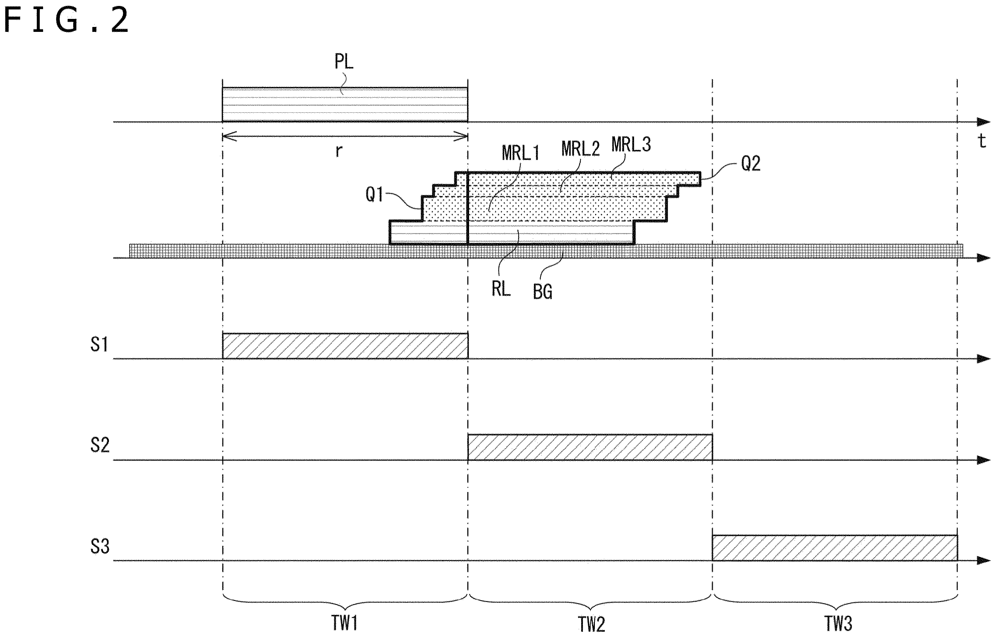

   FIG. 2 is a first timing chart for depicting an example of an operation of the ToF sensor according to the embodiment of the present invention.
[FIG. 3]

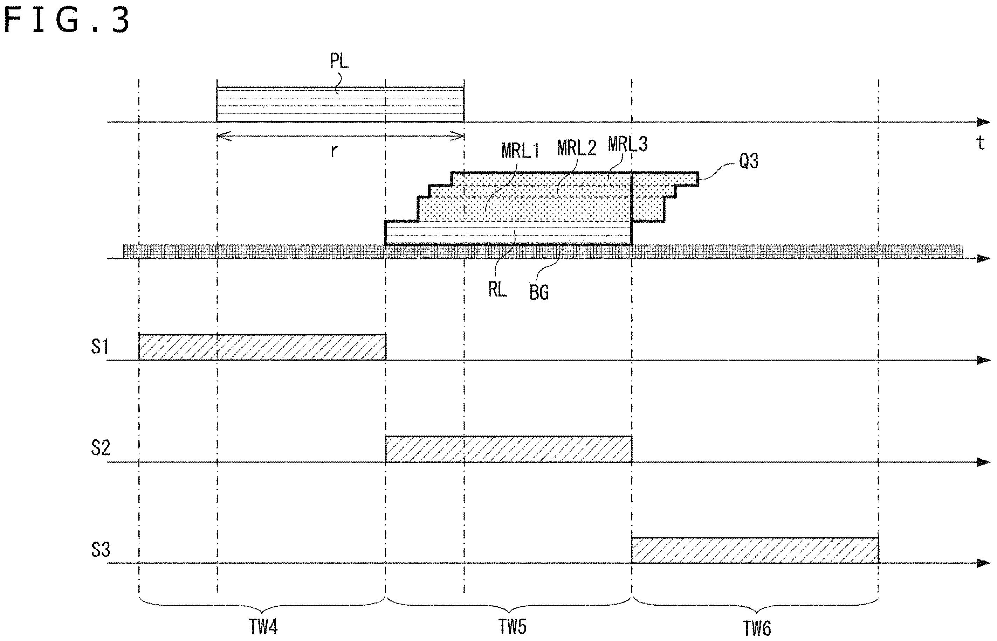

   FIG. 3 is a second timing chart for depicting an example of an operation of the ToF sensor according to the embodiment of the present invention.
[FIG. 4]

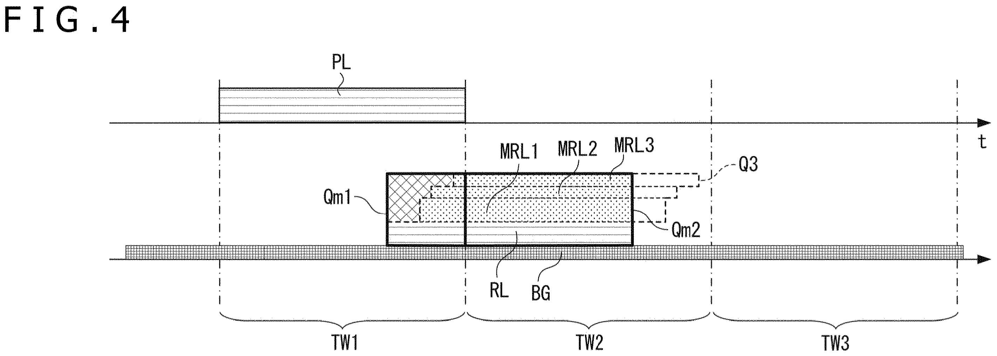

   FIG. 4 is a diagram for explaining the principle of removing or reducing the influence of multipath reflected light in the embodiment of the present invention.
[FIG. 5]

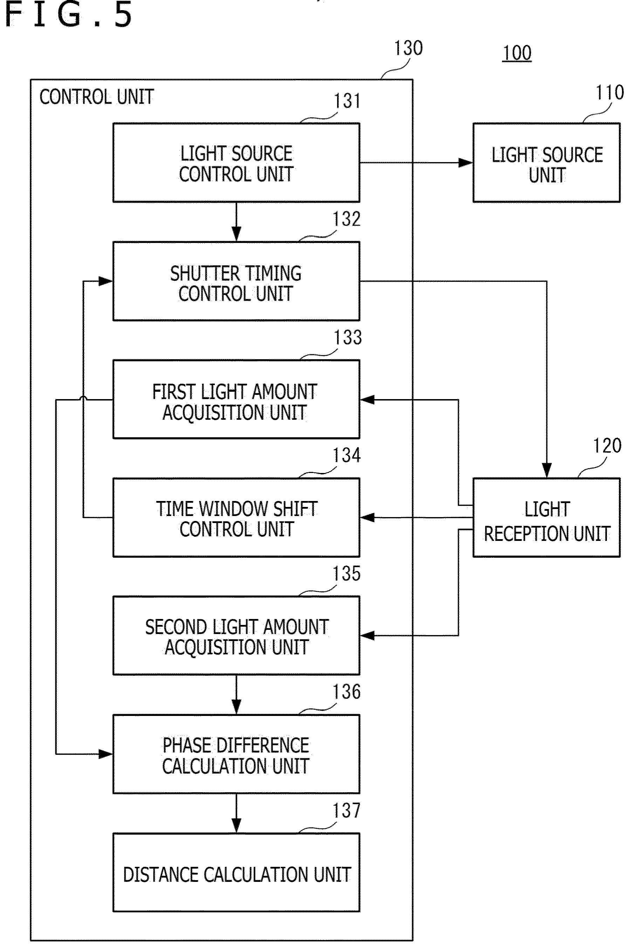

   FIG. 5 is a diagram for depicting a schematic configuration of the ToF sensor according to the embodiment of the present invention.
[FIG. 6]

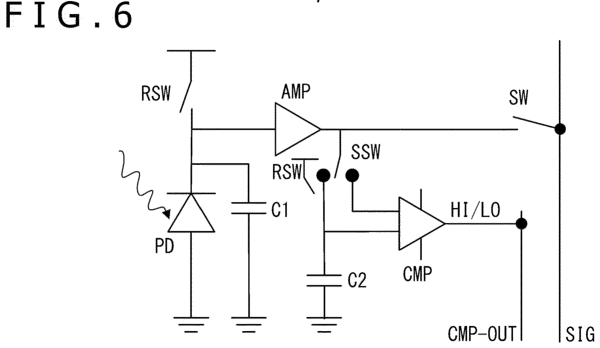

   FIG. 6 is a diagram for depicting a circuit configuration example of a light reception unit applicable to the ToF sensor depicted in FIG. 5.
[FIG. 7]

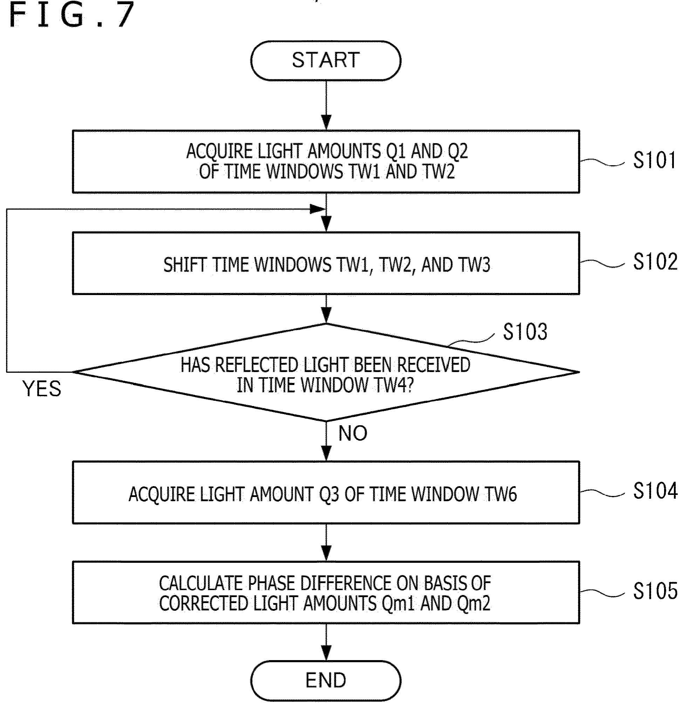

   FIG. 7 is a flowchart for depicting schematic steps of a phase difference calculation method according to the embodiment of the present invention.

### [Description of Embodiment]

Hereinafter, a preferred embodiment of the present invention will be described in detail with reference to the accompanying drawings. It should be noted that in the specification and the drawings, constituent elements having substantially the same functional configurations will be denoted by the same reference signs, and duplicate explanations thereof will be omitted.

FIG. 1 is a diagram for explaining an outline of measurement by a ToF sensor according to the embodiment of the present invention. A ToF sensor 100 applies pulse light PL from a light source. Reflected light of the pulse light PL, the reflected light being reflected by an object obj, is received by a light reception unit of the ToF sensor 100. A distance d from the ToF sensor 100 to the object obj can be calculated on the basis of a phase difference between the pulse light PL and the reflected light. However, the reflected light received by the ToF sensor 100 includes, other than reflected light RL of the pulse light PL, the reflected light RL being reflected only by the object obj, for example, multipath reflected light MRL1 to MRL3 of the pulse light PL, the multipath reflected light MRL1 to MRL3 being reflected by a ceiling or a floor and the object obj or by both the ceiling and the floor and the object obj. Since the phase difference between the reflected light RL and the pulse light PL is different from that between the multipath reflected light MRL1 to MRL3 and the pulse light PL, it becomes difficult to calculate the accurate distance d if the multipath reflected light MRL1 to MRL3 are mixed in the reflected light RL.

FIG. 2 is a first timing chart for depicting an example of an operation of the ToF sensor according to the embodiment of the present invention. In the illustrated example, in the ToF sensor 100, light is received in each of continuous time windows TW1 to TW3 having the same length by using a shutter S1 that opens in synchronization with irradiation time r of the pulse light PL applied from the light source, a shutter S2 that opens only for the same length as the irradiation time r from the end of the application of the pulse light PL, and a shutter S3 that opens only for the same length as the irradiation time r from the time when the shutter S2 closes. The pulse light PL is applied in the time window TW1, and the reflected light of the pulse light PL applied in the initial stage of the irradiation time r is received within the time window TW1. The light amount of the reflected light received in the time window TW1 is depicted as a light amount Q1. Meanwhile, the reflected light of the pulse light PL applied in the later stage of the irradiation time r is received in the time window TW2. The light amount of the reflected light received in the time window TW2 is depicted as a light amount Q2. It should be noted that the light amount of light to be received includes the light amount of background light BG, but, for example, the light amounts Q1 and Q2 of the reflected light excluding the influence of the background light BG can be calculated by subtracting the light amount of light received in the time window TW3 where no reflected light is received from the light amounts of the time windows TW1 and TW2 as the light amount of the background light BG.

As the distance d to the object obj described above with reference to FIG. 1 becomes larger, the phase delay of the reflected light relative to the pulse light PL becomes larger, and therefore, the ratio of the light amount Q1 becomes smaller and the ratio of the light amount Q2 becomes larger. By using this, the ToF sensor 100 calculates the phase difference between the pulse light PL and the reflected light from the ratio of the light amount Q1 to the light amount Q2, and further calculates the distance d from the phase difference. However, if the multipath reflected light MRL1 to MRL3 to be received later than the reflected light RL are mixed, the accuracy of the phase difference and the distance d to be calculated is reduced. Specifically, the inclusion of the multipath reflected light MRL1 to MRL3 causes a deviation between the ratio of the light amount for each of the time windows TW1 and TW2 in the reflected light RL correctly reflecting the distance d and the ratios of the light amounts Q1 and Q2 of the actually observed reflected light. Accordingly, in the present embodiment, the influence of the multipath reflected light in the light amount of the reflected light received in each time window is reduced by additionally executing the procedure described below.

FIG. 3 is a second timing chart for depicting an example of an operation of the ToF sensor according to the embodiment of the present invention. In the illustrated example, the timings of the shutters S1 to S3 are advanced while the application of the pulse light PL in the time window TW1 depicted in FIG. 2 is maintained. Thus, the original time windows TW1 to TW3 are shifted in the negative direction of the time axis to become time windows TW4 to TW6. The time windows TW4 to TW6 are shifted until no reflected light is received in the time window TW4, as illustrated in FIG. 3. In this case, the timing at which the reception of the reflected light RL reflected only by the object obj starts matches the end point of the time window TW4, that is, the start point of the time window TW5. Since the reflected light RL is received only for the same length as the irradiation time r of the pulse light PL, the timing at which the reception of the reflected light RL ends matches the end point of the time window TW5.

On the other hand, since the multipath reflected light MRL1 to MRL3 are received later than the reflected light RL as described above, the timing at which the reception of the multipath reflected light MRL1 to MRL3 starts does not match the start point of the time window TW5, and the timing at which the light reception ends does not match the end point of the time window TW5. As a result, the multipath reflected light MRL1 to MRL3 are also received after the end point of time window TW5, that is, in the time window TW6. That is, the light amount Q3 of the reflected light received in the time window TW6 does not include the light amount of the reflected light RL, and includes only the light amounts of the multipath reflected light MRL1 to MRL3.

FIG. 4 is a diagram for explaining the principle of removing or reducing the influence of the multipath reflected light in the embodiment of the present invention. As described above, in a case where the time windows TW4 to TW6 are shifted until the light amount of the reflected light received in the time window TW4 becomes substantially zero, the light amount Q3 of the reflected light received in the time window TW6 does not include the light amount of the reflected light RL, and includes only the light amounts of the multipath reflected light MRL1 to MRL3. Therefore, as illustrated in FIG. 4, when the light amount Q3 is added to the light amount Q1 of the reflected light in the time window TW1 to be a corrected light amount Qm1 and the light amount Q3 is subtracted from the light amount Q2 of the reflected light in the time window TW2 to be a corrected light amount Qm2, the ratios of the corrected light amounts Qm1 and Qm2 become the same as the ratio of the light amount for each of the time windows TW1 and TW2 in the reflected light RL that does not include the multipath reflected light. By calculating the phase difference and the distance d on the basis of the corrected light amounts Qm1 and Qm2 described above, the influence of the multipath reflected light can be reduced, and the measurement accuracy of the ToF sensor 100 can be improved.

FIG. 5 is a diagram for depicting a schematic configuration of the ToF sensor according to the embodiment of the present invention. In the illustrated example, the ToF sensor 100 includes a light source unit 110, a light reception unit 120, and a control unit 130. The light source unit 110 includes, for example, an infrared laser light source and applies the above-described pulse light PL. The light reception unit 120 includes, for example, a light reception element such as a photodiode and the shutters S1 to S3 arranged for each pixel of the light reception element to block light incident on the light reception element at predetermined time intervals, and receives the reflected light of the pulse light PL in a predetermined time window.

The control unit 130 is implemented by a computer having, for example, a communication interface, a processor, and a memory. The functions of a light source control unit 131, a shutter timing control unit 132, a first light amount acquisition unit 133, a time window shift control unit 134, a second light amount acquisition unit 135, a phase difference calculation unit 136, and a distance calculation unit 137 are realized in software by an operation of the processor according to a program stored in the memory or received via the communication interface. Hereinafter, the function of each unit will be described.

The light source control unit 131 controls the application timing of the pulse light PL in the light source unit 110. Specifically, the light source control unit 131 performs control such that the pulse light PL is applied only for the irradiation time r in a predetermined cycle. In the illustrated example, the shutter timing control unit 132 controls the light source unit 110 such that the irradiation time of the pulse light PL matches the time window TW1 depicted in FIG. 2.

The shutter timing control unit 132 controls the opening/closing timings of the shutters S1 to S3 in the light reception unit 120. The shift of the time windows TW1 to TW3 to the time windows TW4 to TW6 depicted in FIG. 2 and FIG. 3 is executed in such a manner that the time window shift control unit 134 inputs the change amounts of the shutter timings to the shutter timing control unit 132.

The first light amount acquisition unit 133 acquires the light amounts Q1 and Q2 in which the reflected light of the pulse light PL applied in the time window TW1 and received in the time windows TW1 and TW2, respectively. Here, the computation for removing the influence of the background light BG described above with reference to FIG. 2 may be executed by the first light amount acquisition unit 133 or may be executed by the phase difference calculation unit 136 to be described later. As described with reference to FIG. 2, the light amounts Q1 and Q2 include the light amounts of the reflected light RL reflected by the object obj only and the multipath reflected light MRL1 to MRL3.

The time window shift control unit 134 controls the shift of the time windows TW1 to TW3 to the time windows TW4 to TW6 depicted in FIG. 2 and FIG. 3. Specifically, after the first light amount acquisition unit 133 acquires the light amounts Q1 and Q2, the time window shift control unit 134 inputs the change amounts of the shutter timings to the shutter timing control unit 132 such that the operation timings of the shutters S1, S2, and S3 are advanced only by a time corresponding to the shift amounts of the time windows TW1 to TW3 in the negative direction of the time axis.

In the present embodiment, the time window shift control unit 134 acquires, from the light reception unit 120, a comparison result of the light amounts of the reflected light of the pulse light PL applied after the change of the shutter timings and received in the time windows TW4 to TW6, or a light amount as described later. In a case where it is determined that the reflected light is no longer received in the time window TW4 on the basis of the acquired light amount or the comparison result, the time window shift control unit 134 terminates the shift of the time windows and decides the time windows TW4 to TW6.

The second light amount acquisition unit 135 acquires the light amount Q3 of the reflected light of the pulse light PL applied in the time window TW1 and received in the time window TW6. As described above, even if the shutter timings are shifted according to the time windows TW4 to TW6, the application of the pulse light PL is held in the time window TW1. As described with reference to FIG. 4, the light amount Q3 corresponds to the light amount of at least any of the multipath reflected light MRL1 to MRL3 received later than the reflected light RL.

The phase difference calculation unit 136 calculates the phase difference between the pulse light PL and the reflected light on the basis of the corrected light amount Qm1 obtained by adding the light amount Q3 acquired by the second light amount acquisition unit 135 to the light amount Q1 acquired by the first light amount acquisition unit 133 and the corrected light amount Qm2 obtained similarly by subtracting the light amount Q3 from the light amount Q2. The distance calculation unit 137 calculates the distance d on the basis of the phase difference. It should be noted that the calculation of the phase difference after the correction of the light amount and the calculation of the distance based on the phase difference can be performed by using a known technique, and thus the detailed description thereof will be omitted.

According to the ToF sensor 100 having the above-described configuration, the accuracy of measurement of the distance d can be improved by reducing the influence of the multipath reflected light in the calculation of the phase difference. It should be noted that the ToF sensor 100 may be mounted as an integral device including the configuration depicted above in FIG. 5, or may be mounted as a distributed device. In this case, if the light source unit 110 and the light reception unit 120 are arranged close to each other, the control unit 130 need not necessarily be mounted in the same device as the light source unit 110 and the light reception unit 120. In addition, the constituent elements of the control unit 130 need not necessarily be mounted in a single device, and, for example, the light source control unit 131 may be incorporated into a light source device including the light source unit 110, the shutter timing control unit 132 may be incorporated into a light reception device including the light reception unit 120, and the first light amount acquisition unit 133, the time window shift control unit 134, the second light amount acquisition unit 135, and the phase difference calculation unit 136 may be mounted as a phase difference calculation device different therefrom. For example, the distance calculation unit 137 may be mounted as another device for calculating the distance d on the basis of the phase difference output by the phase difference calculation device. The above-described ToF sensor 100 is also an example of the phase difference calculation device including a configuration for calculating the phase difference.

FIG. 6 is a diagram for depicting a circuit configuration example of the light reception unit applicable to the ToF sensor depicted in FIG. 5. In the illustrated example, the circuit configuration includes a photodiode PD, capacitors C1 and C2, a reset switch RSW, an amplifier AMP, a switching switch SSW, a comparator CMP, and a switch SW, and outputs a pixel signal SIG and comparator output CMP-OUT. The photodiode PD is arranged corresponding to a pixel in which the shutter S1 is arranged in the light reception unit 120, and detects a light amount of light incident on the pixel. Before the shutter timing control unit 132 to which the change amounts of the shutter timings are input from the time window shift control unit 134 changes the shutter timings, the switching switch SSW is connected to the capacitor C2 side, and an electric charge corresponding to the light amount of light received in the time window TW1 that has not yet undergone the shift or the time window TW4 is charged to the capacitor C2.

Thereafter, after the shutter timing control unit 132 changes the shutter timings, the electric charge of the capacitor C1 is reset by the reset switch RSW, the switching switch SSW is then connected to the comparator CMP side, and the electric charge corresponding to the light amount of light received in the time window TW4 that has undergone the shift is compared with the electric charge that is charged to the capacitor C2 and that corresponds to the light amount that has not yet undergone the shift. In a case where the output of the comparator CMP indicates that the electric charge after the shift is smaller than the electric charge before the shift, the time window shift control unit 134 further shifts the time windows TW4 to TW6 in the negative direction of the time axis. In a case where the output of the comparator CMP indicates that the electric charge before the shift and the electric charge after the shift are the same, the time window shift control unit 134 terminates the shift of the time windows and decides the time windows TW4 to TW6. The time window shift control unit 134 may set, to the shift amounts of the time windows TW4 to TW6, the last shift amounts indicating that the electric charge after the shift is smaller than the electric charge before the shift.

As described above, a circuit configuration capable of comparing the light amounts received before and after the shift of the time windows may be provided for each pixel of the light reception unit 120, and the time window shift control unit 134 of the control unit 130 may determine the termination of the shift of the time windows due to the change of the shutter timings, on the basis of the comparison result (comparator output CMP-OUT) of the light amounts. Alternatively, the light reception unit 120 may not be provided with the above-described circuit configuration, and the time window shift control unit 134 of the control unit 130 may determine the termination of the shift of the time windows by comparing the light amount received in the time window TW1 that has not yet undergone the shift and the light amount received in the time window TW4 that has undergone the shift. In the above example, the termination of the shift is determined on the basis of the result of the comparison between the light amount received in the time window TW1 that has not yet undergone the shift and the light amount received in the time window TW4 that has undergone the shift, but in another example, the shift of the time windows may be terminated in a case where the light amount received in the time window TW4 becomes the same as the light amount (light amount of the background light BG) received in the time window TW3.

FIG. 7 is a flowchart for depicting schematic steps of a phase difference calculation method according to the embodiment of the present invention. In the illustrated example, each step is executed by the control unit 130 of the ToF sensor 100. When the pulse light PL is applied under the control of the light source control unit 131 and the shutter timing control unit 132 controls the shutters S1 to S3 such that the reflected light is received in the time windows TW1 to TW3, the first light amount acquisition unit 133 acquires the light amounts Q1 and Q2 of the time windows TW1 and TW2 (Step S101). As described above, the light amounts Q1 and Q2 acquired here include the light amounts of the reflected light RL and the multipath reflected light MRL1 to MRL3. Next, the time window shift control unit 134 shifts the time windows TW1, TW2, and TW3 in the negative direction of the time axis (Step S102). For example, the time window shift control unit 134 repeats the shift of the time windows by predetermined amounts until no reflected light is received in the time window TW4 (Step S103).

After the shift of the time windows is terminated, the second light amount acquisition unit 135 acquires the light amount Q3 of the time window TW6 (Step S104). The phase difference calculation unit 136 calculates the phase difference between the pulse light PL and the reflected light on the basis of the corrected light amount Qm1 obtained by adding the light amount Q3 to the light amount Q1 and the corrected light amount Qm2 obtained by subtracting the light amount Q3 from the light amount Q2 (Step S105). The calculated phase difference may be used for calculating the distance d in the distance calculation unit 137, or may be stored or output as a phase difference and used for calculating the distance d afterwards or by another device.

Although the preferred embodiment of the present invention has been described above in detail with reference to the accompanying drawings, the present invention is not limited to such examples. It is obvious that a person having ordinary knowledge in the technical field to which the present invention belongs can arrive at various examples of changes or modifications within the scope of the technical ideas described in the claims, and it is understood that these also naturally belong to the technical range of the present invention.

### [Reference Signs List]

- 100:: ToF sensor
- 110:: Light source unit
- 120:: Light reception unit
- 130:: Control unit
- 131:: Light source control unit
- 132:: Shutter timing control unit
- 133:: First light amount acquisition unit
- 134:: Time window shift control unit
- 135:: Second light amount acquisition unit
- 136:: Phase difference calculation unit
- 137:: Distance calculation unit
- PL:: Pulse light
- RL:: Reflected light
- MRL1 to MRL3:: Multipath reflected light
- Q1 to Q3:: Light amount
- Qm1, Qm2:: Corrected light amount
- S1 to S3:: Shutter
- TW1 to TW6:: Time window

## Claims

1. A phase difference calculation device comprising:
a first light amount acquisition unit (133) that, among adjacent and continuous first, second, and third time windows (TW1, TW2, TW3) having a same length, acquires a first light amount of reflected light of pulse light applied throughout the first time window (TW1) and received in the first time window (TW1) and a second light amount of the reflected light received in the second time window (TW2);
a time window shift control unit (134) that shifts the first, second, and third time windows (TW1, TW2, TW3) in a negative direction of a time axis to set fourth, fifth, and sixth time windows (TW4, TW5, TW6), and shifts the fourth, fifth, and sixth time windows (TW4, TW5, TW6) in the negative direction of the time axis until no reflected light is received in the fourth time window (TW4) ;
a second light amount acquisition unit (135) that acquires a third light amount of the reflected light received in the sixth time window (TW6); and
a phase difference calculation unit (136) that calculates a phase difference between the light and the reflected light on a basis of a first corrected light amount obtained by adding the third light amount to the first light amount and a second corrected light amount obtained by subtracting the third light amount from the second light amount.

2. The phase difference calculation device according to claim 1, further comprising:
a light reception unit (120) that includes a light reception element for receiving the reflected light and a shutter for blocking light incident on the light reception element at predetermined time intervals, wherein the first, second and third time windows (TW1, TW2, TW3) and the fourth, fifth and sixth time windows (TW4, TW5, TW6) are defined by opening and closing timings of the shutter, and
wherein the time window shift control unit (134) shifts the fourth, fifth, and sixth time windows (TW4, TW5, TW6), in the negative direction of the time axis by advancing opening and closing timings of the shutter.

3. The phase difference calculation device according to claim 2, wherein the light reception unit (120) further includes a circuit configuration capable of comparing a light amount received in the fourth time window before the operation timing of the shutter is advanced and a light amount received in the fourth time window after the opening and closing timings of the shutter are advanced.

4. A phase difference calculation method comprising:
among adjacent and continuous first, second, and third time windows (TW1, TW2, TW3) having a same length, acquiring a first light amount of reflected light of pulse light applied throughout the first time window (TW1) and received in the first time window (TW1) and a second light amount of the reflected light received in the second time window (TW2);
shifting the first, second, and third time windows (TW1, TW2, TW3) in a negative direction of a time axis to set fourth, fifth, and sixth time windows (TW4, TW5, TW6), and shifting the fourth, fifth, and sixth time windows (TW4, TW5, TW6) in the negative direction of the time axis until no reflected light is received in the fourth time window (TW4);
acquiring a third light amount of the reflected light received in the sixth time window (TW6); and
calculating a phase difference between the light and the reflected light on a basis of a first corrected light amount obtained by adding the third light amount to the first light amount and a second corrected light amount obtained by subtracting the third light amount from the second light amount.

5. A program for a computer of a control unit (130) of a phase difference calculation device according to any one of claims 1 to 3, the program comprising instructions which, when executed by the computer, cause the control unit (130) to control the phase difference calculation device to perform the method according to claim 4.

## Patentansprüche

1. Phasendifferenzberechnungsvorrichtung, umfassend:
eine erste Lichtmengenerfassungseinheit (133), die, unter angrenzenden und kontinuierlichen ersten, zweiten und dritten Zeitfenstern (TW1, TW2, TW3), die eine gleiche Länge aufweisen, eine erste Lichtmenge von reflektiertem Licht von Impulslicht, das während des ersten Zeitfensters (TW1) angewendet und in dem ersten Zeitfenster (TW1) empfangen wird, und eine zweite Lichtmenge des reflektierten Lichts, das in dem zweiten Zeitfenster (TW2) empfangen wird, erfasst;
eine Zeitfensterverschiebungssteuereinheit (134), die das erste, das zweite und das dritte Zeitfenster (TW1, TW2, TW3) in einer negativen Richtung einer Zeitachse verschiebt, um ein viertes, ein fünftes und ein sechstes Zeitfenster (TW4, TW5, TW6) einzustellen, und das vierte, das fünfte und das sechste Zeitfenster (TW4, TW5, TW6) in der negativen Richtung der Zeitachse verschiebt, bis kein reflektiertes Licht in dem vierten Zeitfenster (TW4) empfangen wird;
eine zweite Lichtmengenerfassungseinheit (135), die eine dritte Lichtmenge des reflektierten Lichts erfasst, das in dem sechsten Zeitfenster (TW6) empfangen wird; und
eine Phasendifferenzberechnungseinheit (136), die eine Phasendifferenz zwischen dem Licht und dem reflektierten Licht auf einer Basis einer ersten korrigierten Lichtmenge, die durch ein Hinzufügen der dritten Lichtmenge zu der ersten Lichtmenge erhalten wird, und einer zweiten korrigierten Lichtmenge, die durch ein Abziehen der dritten Lichtmenge von der zweiten Lichtmenge erhalten wird, berechnet.

2. Phasendifferenzberechnungsvorrichtung nach Anspruch 1, ferner umfassend:
eine Lichtempfangseinheit (120), die ein Lichtempfangselement zum Empfangen des reflektierten Lichts und einen Verschluss zum Blockieren von Licht, das auf das Lichtempfangselement einfällt, in vorbestimmten Zeitintervallen einschließt, wobei das erste, das zweite und das dritte Zeitfenster (TW1, TW2, TW3) und das vierte, das fünfte und das sechste Zeitfenster (TW4, TW5, TW6) durch Öffnungs- und Schließzeitpunkte des Verschlusses definiert sind und
wobei die Zeitfensterverschiebungssteuereinheit (134) das vierte, das fünfte und das sechste Zeitfenster (TW4, TW5, TW6) in der negativen Richtung der Zeitachse durch ein Vorverlegen der Öffnungs- und Schließzeitpunkte des Verschlusses verschiebt.

3. Phasendifferenzberechnungsvorrichtung nach Anspruch 2, wobei die Lichtempfangseinheit (120) ferner eine Schaltungskonfiguration einschließt, die zum Vergleichen einer Lichtmenge, die in dem vierten Zeitfenster empfangen wird, bevor der Betriebszeitpunkt des Verschlusses vorverlegt wird, und einer Lichtmenge, die in dem vierten Zeitfenster empfangen wird, nachdem die Öffnungs- und Schließzeitpunkte des Verschlusses vorverlegt werden, in der Lage ist.

4. Phasendifferenzberechnungsverfahren, umfassend:
unter angrenzenden und kontinuierlichen ersten, zweiten und dritten Zeitfenstern (TW1, TW2, TW3), die eine gleiche Länge aufweisen, Erfassen einer ersten Lichtmenge von reflektiertem Licht von Impulslicht, das während des ersten Zeitfensters (TW1) angewendet und in dem ersten Zeitfenster (TW1) empfangen wird, und einer zweiten Lichtmenge des reflektierten Lichts, das in dem zweiten Zeitfenster (TW2) empfangen wird;
Verschieben des ersten, des zweiten und des dritten Zeitfensters (TW1, TW2, TW3) in einer negativen Richtung einer Zeitachse, um das vierte, das fünfte und das sechste Zeitfenster (TW4, TW5, TW6) einzustellen, und Verschieben des vierten, des fünften und des sechsten Zeitfensters (TW4, TW5, TW6) in der negativen Richtung der Zeitachse, bis kein reflektiertes Licht in dem vierten Zeitfenster (TW4) empfangen wird;
Erfassen einer dritten Lichtmenge des reflektierten Lichts, das in dem sechsten Zeitfenster (TW6) empfangen wird; und
Berechnen einer Phasendifferenz zwischen dem Licht und dem reflektierten Licht auf einer Basis einer ersten korrigierten Lichtmenge, die durch das Hinzufügen der dritten Lichtmenge zu der ersten Lichtmenge erhalten wird, und einer zweiten korrigierten Lichtmenge, die durch das Abziehen der dritten Lichtmenge von der zweiten Lichtmenge erhalten wird.

5. Programm für einen Computer einer Steuereinheit (130) einer Phasendifferenzberechnungsvorrichtung nach einem der Ansprüche 1 bis 3, das Programm umfassend Anweisungen, die, wenn sie durch den Computer ausgeführt werden, die Steuereinheit (130) veranlassen, die Phasendifferenzberechnungsvorrichtung zu steuern, um das Verfahren nach Anspruch 4 durchzuführen.

## Revendications

1. Dispositif de calcul de différence de phase comprenant :
une première unité d'acquisition de quantité de lumière (133) qui, parmi des première, deuxième et troisième fenêtres temporelles (TW1, TW2, TW3) adjacentes et continues ayant une même longueur, acquiert une première quantité de lumière d'une lumière réfléchie d'une lumière pulsée appliquée tout au long de la première fenêtre temporelle (TW1) et reçue dans la première fenêtre temporelle (TW1), et une deuxième quantité de lumière de la lumière réfléchie reçue dans la deuxième fenêtre temporelle (TW2) ;
une unité de commande de décalage de fenêtre temporelle (134) qui décale les première, deuxième et troisième fenêtres temporelles (TW1, TW2, TW3) dans une direction négative d'un axe temporel afin de définir des quatrième, cinquième et sixième fenêtres temporelles (TW4, TW5, TW6), et décale les quatrième, cinquième et sixièmes fenêtres temporelles (TW4, TW5, TW6) dans la direction négative de l'axe temporel jusqu'à ce qu'aucune lumière réfléchie ne soit reçue dans la quatrième fenêtre temporelle (TW4) ;
une seconde unité d'acquisition de quantité de lumière (135) qui acquiert une troisième quantité de lumière de la lumière réfléchie reçue dans la sixième fenêtre temporelle (TW6) ; et
une unité de calcul de différence de phase (136) qui calcule une différence de phase entre la lumière et la lumière réfléchie sur la base d'une première quantité de lumière corrigée obtenue en ajoutant la troisième quantité de lumière à la première quantité de lumière, et d'une deuxième quantité de lumière corrigée obtenue en soustrayant la troisième quantité de lumière de la deuxième quantité de lumière.

2. Dispositif de calcul de différence de phase selon la revendication 1, comprenant en outre :
une unité de réception de lumière (120) qui comporte un élément de réception de lumière destiné à recevoir la lumière réfléchie et un obturateur destiné à bloquer une lumière incidente sur l'élément de réception de lumière à des intervalles de temps prédéterminés, dans lequel les première, deuxième et troisième fenêtres temporelles (TW1, TW2, TW3) ainsi que les quatrième, cinquième et sixième fenêtres temporelles (TW4, TW5, TW6) sont définies par des instants d'ouverture et de fermeture de l'obturateur, et
dans lequel l'unité de commande de décalage de fenêtre temporelle (134) décale les quatrième, cinquième et sixième fenêtres temporelles (TW4, TW5, TW6) dans la direction négative de l'axe temporel en faisant avancer les instants d'ouverture et de fermeture de l'obturateur.

3. Dispositif de calcul de différence de phase selon la revendication 2, dans lequel l'unité de réception de lumière (120) comporte en outre une configuration de circuit pouvant comparer une quantité de lumière reçue dans la quatrième fenêtre temporelle avant l'avance de l'instant de fonctionnement de l'obturateur et une quantité de lumière reçue dans la quatrième fenêtre temporelle après l'avance des instants d'ouverture et de fermeture de l'obturateur.

4. Procédé de calcul de différence de phase comprenant :
parmi des première, deuxième et troisième fenêtres temporelles (TW1, TW2, TW3) adjacentes et continues ayant une même longueur, l'acquisition d'une première quantité de lumière d'une lumière réfléchie d'une lumière pulsée appliquée tout au long de la première fenêtre temporelle (TW1) et reçue dans la première fenêtre temporelle (TW1), et d'une deuxième quantité de lumière de la lumière réfléchie reçue dans la deuxième fenêtre temporelle (TW2) ;
le décalage des première, deuxième et troisième fenêtres temporelles (TW1, TW2, TW3) dans une direction négative d'un axe temporel afin de définir des quatrième, cinquième et sixième fenêtres temporelles (TW4, TW5, TW6), et le décalage des quatrième, cinquième et sixièmes fenêtres temporelles (TW4, TW5, TW6) dans la direction négative de l'axe temporel jusqu'à ce qu'aucune lumière réfléchie ne soit reçue dans la quatrième fenêtre temporelle (TW4) ;
l'acquisition d'une troisième quantité de lumière de la lumière réfléchie reçue dans la sixième fenêtre temporelle (TW6) ; et
le calcul d'une différence de phase entre la lumière et la lumière réfléchie sur la base d'une première quantité de lumière corrigée obtenue en ajoutant la troisième quantité de lumière à la première quantité de lumière, et d'une deuxième quantité de lumière corrigée obtenue en soustrayant la troisième quantité de lumière de la deuxième quantité de lumière.

5. Programme destiné à un ordinateur d'une unité de commande (130) d'un dispositif de calcul de différence de phase selon l'une quelconque des revendications 1 à 3, le programme comprenant des instructions qui, lorsqu'elles sont exécutées par l'ordinateur, amènent l'unité de commande (130) à commander le dispositif de calcul de différence de phase afin d'effectuer le procédé selon la revendication 4.
